# EUROPEAN PATENT SPECIFICATION

(11) **EP 1 887 260 B1**
(45) Date of publication and mention of the grant of the patent: **19.10.2011**
(21) Application number: 07253125.4
(22) Date of filing: 09.08.2007
(51) Int. Cl.: F16H 61/662, F16H 9/18

(54) **Continuously variable transmission**
Stufenloses Getriebe
Transmission continuellement variable

(30) Priority: 10.08.2006 JP 2006218999
(43) Date of publication of application: 13.02.2008
(73) Proprietor: Yamaha Hatsudoki Kabushiki Kaisha, Iwata-shi, Shizuoka 438-8501 (JP)
(72) Inventor: Asaoka, Ryousuke, Iwata-shi, Shizuoka-ken 438-8501 (JP)
(74) Representative: Lamb, Martin John Carstairs

(56) References cited:
- EP-A2- 0 225 153
- DE-A1- 3 829 262
- JP-A- 9 329 229
- US-A1- 2006 068 953

## Description

### FIELD OF THE INVENTION

This invention relates to a continuously variable transmission, in particular to a belt type of continuously variable transmission electronically controlled by a controller.

### BACKGROUND TO THE INVENTION

The V-belt type of continuously variable transmission is widely in use on vehicles, particularly two-wheeled vehicles, such as a scooted type of two wheeled vehicle. This V-belt type of continuously variable transmission is made up of a primary sheave disposed on a primary shaft for receiving output of a power source, such as an engine, and a secondary sheave disposed on a secondary shaft for the output to be taken out to a drive wheel, wherein a V-belt is routed around both sheaves. The transmission ratio between both sheaves may be continuously changed by changing groove widths of respective sheaves via a groove width regulating mechanism, thereby regulating the routing radii of the V-belt on the sheaves.

It is common practice to constitute each of the primary sheave and the secondary sheave with a fixed flange and a movable flange to form a V-groove therebetween. Each movable flange is freely movable on a respective shaft and the transmission ratio may be continuously regulated by moving the movable flanges by means of the groove width regulating mechanism.

A continuously variable transmission of this kind may utilise an electric motor to regulate the groove widths. As the movable flange of at least the primary sheave may be moved in both directions to narrow (toward top ratio) and widen (toward low ratio)the primary sheave groove width by the motion thrust of the electric motor, the groove widths may be regulated freely. Such an arrangement is disclosed in JP-3043061. Other examples are disclosed in JP-H7-86383 and JP-A-H4-157242.

On a vehicle equipped with a mechanical, belt type of continuously variable transmission, roller weights disposed inside the primary sheave move outward due to centrifugal force and press and cause the movable flange on the primary sheave side to move. The groove width of each sheave is regulated by the balance between the pressing force of the roller weights of the primary sheave and the force of a spring and a torque cam of the secondary sheave.

With the above described arrangement, because centrifugal force works on the roller weights along with the rotation of the primary sheave caused by engine torque, belt pressing force on the primary sheave side is produced immediately following an increase in the engine revolution at the time of start. By the pressing force, the belt routed around both sheaves becomes taut, so that the belt does not flutter due to variations in torque at the time of start.
On the other hand, on a vehicle equipped with an electronic, belt type of continuously variable transmission, while the displacement of the movable flange on the secondary sheave side is effected by belt pressing force of the spring and the torque cam, as in the mechanical continuously variable transmission, the displacement of the movable sheave on the primary sheave side is controlled with the electric motor. When starting the vehicle, it is controlled, until the vehicle speed exceeds a specified value, to hold the movable flange to a position (low position) in which the primary sheave groove width becomes the maximum.

With the above arrangement, the electric motor does not work until the vehicle speed reaches a specified value, and the movable flange on the primary sheave side remains fixed to the low position, so that no belt pressing force is produced. Therefore, even if the belt on the primary sheave side moves in a slackening direction, the movable sheave cannot follow the motion. Therefore, the belt might flutter. If the belt flutters at the time of start, the rider may have uncomfortable feeling because of vibration caused by the flutter, or the flutter may cause an unusual noise or a loud noise.

A further example of a transmission is detailed in US2006/068953, which discloses the features of the preamble of claim 1 and describes a transmission controller for a continuously variable transmission that includes a driving pulley having an adjustable width, a driven pulley and a v-belt wound between the drive pulley and the driven pulley. The transmission controller determines a throttle opening based on an output signal from a throttle opening sensor. If the throttle opening is above a reference throttle opening, it is judged that a rider is trying to restart the vehicle. In this case, a movable half of the driving pulley is pressed onto the v-belt in order to generate lateral pressure on the belt, which allows restart to be achieved without sliding between the driving pulley and belt.

DE3829262 discloses a continuously variable transmission of the belt type having a control unit. The control unit generates control signals for varying the effective diameter of a pulley of the transmission to thereby control the transmission ratio. The control unit is adapted to determine whether or not the vehicle is started and generate a control signal to temporarily narrow the pulley width when it is determined that the vehicle is being started. The controller first determines whether or not a vehicle is starting by determining if the velocity of the vehicle is zero, or less than a small value. If the velocity is zero, i.e. it is determined that the vehicle is being started, it is further determined if the accelerator/throttle is on, the gear shift is in drive or reverse and the accelerator/throttle opening is greater than a threshold. If the gear is in drive or reverse and the throttle is open above the threshold, then the width of the drive pulley may be narrowed so as to enhance the pressing force on the v-belt.

JP09329229 describes apparatus for setting a target transmission ratio on a continuously variable transmission. The apparatus is provided with vehicle start detecting means for detecting the start of a vehicle. Once a vehicle start is detected, compensation means shifts a transmission gear ratio towards a high side of a maximum low position by a predetermined correction value amount.

A main object of the invention is to provide a straddle type of vehicle in which the fluttering motion of the belt is prevented or at least minimised at the time of starting a vehicle.

### SUMMARY OF THE INVENTION

According to the present invention, there is provided a continuously variable transmission for a vehicle according to claim 1.

Accordingly, as the moveable flange of the primary sheave is moved to decrease the groove width, this will have the effect of pressing against the endless belt, which may be a V-belt, to therefore provide an initial load to assist to minimize or prevent fluttering of the belt.

According to the invention, the controller is adapted to control the actuator to move the moveable flange of the primary sheave in a direction to increase the width of the belt groove after the belt groove is initially moved in a direction to decrease the width of the belt groove. Accordingly, after the initial load is applied to the belt by decreasing the groove width, the groove width may then be increased once again to release this initial load.

Further according to the invention, the controller is adapted to control the actuator to move the moveable flange of the primary sheave in a direction to increase the width of the belt groove on the basis of a specified condition.

The specified condition comprises an increase in vehicle speed above a predetermined value. The transmission may further comprise a vehicle speed sensor coupled to the controller and adapted to detect the speed of the vehicle and output a signal to the controller when the vehicle speed increase above the predetermined value.

Alternatively, or additionally, the specified condition may comprise an elapsed time period from the a throttle opening sensor outputting a signal to the controller when the throttle is switched from a closed state to an open state.

The secondary sheave may comprise a fixed flange and a moveable flange which define a groove therebetween for accommodating the endless belt, wherein the moveable flange of the secondary sheave may be biased towards a direction to decrease the groove width. The moveable flange of the secondary sheave may be biased with a spring and a torque cam.

According to a further aspect of the present invention, there is provided a continuously variable transmission electronically controlled by a controller, **characterized in that** the continuously variable transmission is of a belt type and has a belt routed around V-grooves of a primary sheave and a secondary sheave to continuously change transmission ratio by changing the groove widths of the respective sheaves, the primary sheave is made up of a fixed flange and a movable flange attached to a rotary shaft, the groove width of the primary sheave is regulated with the motion of the movable flange of the primary sheave controlled by an actuator, the actuator is connected to the controller, to which a throttle opening degree sensor for detecting the opening degree of throttle is connected, the throttle opening degree sensor outputs to the controller at least a signal produced when the throttle opening degree is switched from closed state to open state, and at the time a vehicle starts from the standing state, the controller, on the basis of the signal generated when the throttle opening degree is switched from closed state to open state, controls the actuator so as to move the movable flange from an ordinary position in the standing state of the vehicle toward the direction of decreasing the groove width of the primary sheave.

According to the invention, the controller is characterized to control the actuator so as to move the movable flange that has moved toward the direction of decreasing the groove width of the primary sheave back to the ordinary position on the basis of a specified condition.

In one embodiment, a vehicle speed sensor for detecting the vehicle speed is connected to the controller, and the specified condition is the time the vehicle speed detected with the vehicle speed sensor exceeds a threshold value.

In one embodiment, the specified condition is the time a specified period of time has elapsed after the throttle opening degree is switched from closed state to open state.

In one embodiment, the secondary sheave is made up of a fixed flange and a movable flange attached to a rotary shaft, and the movable flange of the secondary sheave is urged with a spring and a torque cam toward the direction of decreasing the groove width.

At the time the vehicle starts from the standing state, the movable flange that has moved toward the direction of decreasing the groove width may be pressing the belt routed around the V-groove of the primary sheave.

According to the invention, in the continuously variable transmission electronically controlled by the controller, at the time the vehicle starts from the standing state, the controller controls the electric motor on the basis of the signal generated when the throttle opening degree switches from closed state to open state so as to move the movable flange on the primary sheave side from the ordinary position (low position) in the standing state of the vehicle toward the direction (toward the top side) of decreasing the groove width of the primary sheave. In other words, at the time of starting, the electric motor controlled by the controller pushes the movable flange of the primary sheave from the low position toward the top side. Because it is possible to apply load on the belt routed around the primary sheave side by pushing the movable flange of the primary sheave from the low position toward the top side, it is possible to prevent the belt from fluttering at the time the vehicle starts.

According to a second aspect of the present invention there is provided a vehicle comprising a continuously variable transmission according to any one of the mentioned aspects.

### BRIEF DESCRIPTION OF THE DRAWINGS

These and other aspects of the present invention will now be described, by way of example only, with reference to the accompanying drawings, in which:
Fig. 1 is a schematic illustration of a basic constitution of the continuously variable transmission according to an embodiment of the present invention;
Fig. 2 is a block diagram representation of the continuously variable transmission of Fig. 1;
Fig. 3 is an external side view of a straddle type of vehicle incorporating the continuously variable transmission of Fig. 1;
Fig. 4 a flowchart showing the process flow of a controller of the continuously variable transmission; and
Fig. 5 is a graph showing the relationship of the flange position, etc. at the time of initiating movement of the vehicle from standing state.

### DETAILED DESCRIPTION OF THE DRAWINGS

Before a detailed description of the exemplary embodiment of the present invention is given, it should be noted that the present inventor has been working on the development of an electronic, belt type of continuously variable transmission for electronically controlling the transmission ratio by effecting the displacement of the movable flange on the primary sheave side with an electric motor, and found a problem that, when a vehicle starts from the standing state, the belt makes a fluttering motion, so that the vehicle cannot be started smoothly. Such fluttering of the belt in the starting stage of a vehicle was not recognized with the mechanical type of continuously variable transmission in which the displacement of the movable flange is effected by pressing the roller weights by centrifugal force. Therefore, the inventor eagerly examined the cause of the flutter occurring only with the electronic type of continuously variable transmission in spite of little difference in starting action between electronic and mechanical types, and obtained the following findings.

With the mechanical type of continuously variable transmission, as the centrifugal force works on the roller weights immediately when engine torque is transmitted and the primary sheave rotates, the belt pressing force on the primary sheave side is always produced according to the rise in the engine revolution. Therefore, even if the belt bounces due to torque variation at the time of start, it is held down with the pressing force of the movable flange and brought into taut state, so that the belt does not flutter.

With the electronic type of continuously variable transmission, however, as the electric motor does not work until the vehicle speed exceeds a specified value and the movable flange on the primary sheave side remains fixed in the low position, the belt pressing force on the primary sheave side does not occur. Therefore, when the belt on the primary sheave side bounces due to torque change when starting, the movable flange cannot follow the bouncing motion and as such fluttering of the belt occurs.

The inventor found out it is possible to realize a mechanism for preventing the belt from fluttering even with the electronic continuously variable transmission if a control is implemented as with the mechanical type in which tension is applied to the belt when starting, or a control that produces a belt pressing force, and devised the present invention.

An embodiment of the invention will be hereinafter described with reference to appended figures. In the figures shown hereinafter, components and parts of the same function are provided with the same symbols and explained. The invention is not limited to the embodiment below.

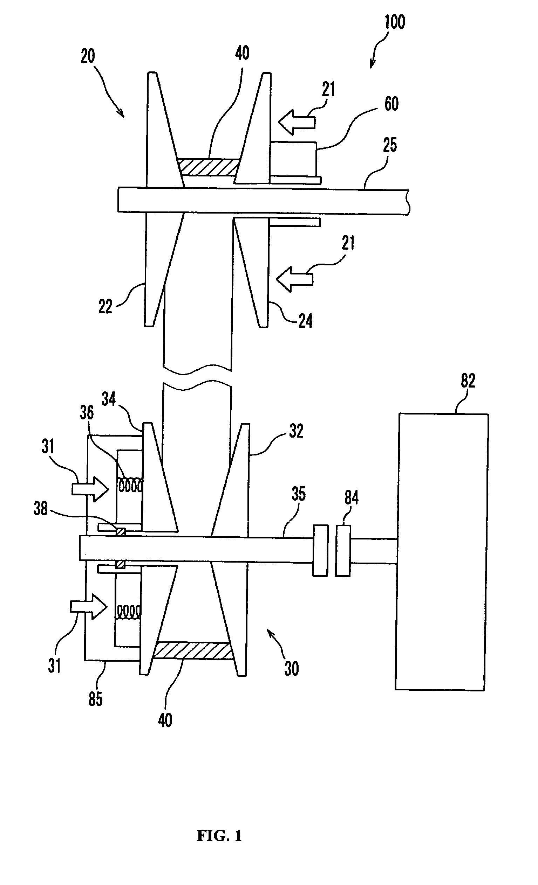

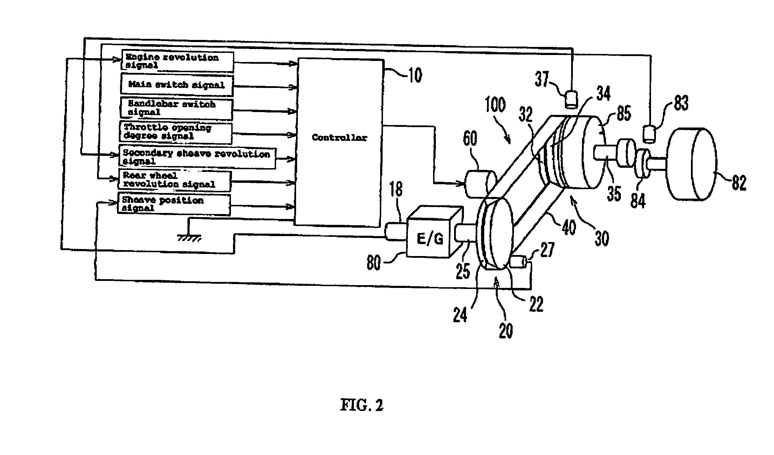

An arrangement of a continuously variable transmission 100 as an embodiment of the invention will be hereinafter described with reference to Figs. 1 and 2. Fig. 1 is a schematic illustration of a basic arrangement of the belt type of continuously variable transmission 100. Fig. 2 is a block diagram representation of the continuously variable transmission 100.

The continuously variable transmission 100 is of a belt type and comprises: a primary sheave 20, a secondary sheave 30, and a belt 40 routed around the V-grooves of both sheaves 20 and 30. By changing the groove widths of respective sheaves with a groove width regulating mechanism, the routing radii of the belt 40 on respective sheaves is regulated, thereby regulating continuously the transmission ratio between both the sheaves.

The primary sheave 20 is connected to an engine 80. The secondary sheave 30 is connected to a rear wheel 82 through a centrifugal clutch 85 and a final speed reduction mechanism 84. The drive force of the engine 80 outputted according to accelerator operation is transmitted to the primary sheave 20 and converted with the primary sheave 20 into rotary force of the belt 40. Then, as the rotary force of the belt 40 increases, the centrifugal clutch 85 is connected, and the rotary force of the belt 40 is transmitted to the rear wheel 82 through the secondary sheave 30 and the final speed reduction mechanism 84 to drive the rear wheel 82.

The primary sheave 20 and the secondary sheave 30 of this embodiment are respectively made up of fixed flanges 22, 32 and movable flanges 24, 34 attached respectively to rotary shafts 25, 35. Both movable flanges 24, 34 are provided respectively to be movable in an axial direction relative to a respective rotary shaft 25, 35. Incidentally, the fixed flange is also called as the fixed sheave, and the movable flange is also called as the movable sheave.

The movable flange 34 of the secondary sheave 30 is urged with a spring 36 in the direction of narrowing the groove width(in the direction of arrow 31). A torque cam 38 is provided in a position of the movable flange 34 of the secondary sheave 30 for applying thrust in the axial direction of the movable flange 34 according to the difference between the torque of the fixed flange 32 and the torque of the movable flange 34. The torque cam 38 is made up of a cam groove formed on the movable flange 34 side and a guide pin formed on the rotary shaft 35 side to be slidably inserted into the cam groove. The torque cam 38 has only to be of a constitution integral with the movable flange 34 or the rotary shaft 35 to produce thrust.

On the other hand, the groove width of the primary sheave 20 is regulated by motion of the movable flange 24 of the primary sheave 20 which is controlled by an actuator 60. Because it is possible to move the movable flange 24 either in the direction of narrowing the groove width (toward the top side) or in the direction of widening the groove width (toward the low side) of the primary sheave 20, the groove width can be regulated freely.

Figure 1 represents a configuration of the transmission 100 when the vehicle is in a standing state (in the state of the vehicle speed of 0 km/h). In this case, the transmission ratio of the continuously variable transmission 100 is normally low (maximum transmission ratio). When the transmission ratio is low, the groove width of the primary sheave 20 is the widest, while the groove width of the secondary sheave 30 is the narrowest. Along with the increase in the vehicle speed after a start, the groove width of the primary sheave 20 narrows to increase the routing radius of the belt 40. Then, as the tension on the belt 40 increases, the belt 40 on the secondary sheave 30 side is pulled. When the tension on the belt 40 exceeds the urging force of the spring 36, the groove width of the secondary sheave 30 is widened. As a result, the routing radius of the belt 40 on the secondary sheave 30 side decreases. In effect, the transmission ratio decreases (shifts toward the top side).

A controller 10 of this embodiment will now be described with reference to Fig. 2, in addition to Fig. 1. Fig. 2 is a block diagram illustrating the constitution of the continuously variable transmission 100 of this embodiment.

The actuator 60 for regulating the groove width of the primary sheave 20 is electrically connected to the controller (speed changing controller) 10. The actuator 60 of this embodiment comprises an electric motor. The electric motor 60 is controlled by, for example, PWM (pulse-width modulation) output. The controller 10 is provided with an ECU (electronic control unit). The electronic control unit (ECU) is provided with, for example, a microcomputer (MPU). It should be understood that the actuator 60 may comprise other components than an electric motor, such as stepping motor, linear motor, solenoid, hydraulic system, or pneumatic system or the like for regulating the groove width of the primary sheave 20.

A throttle opening degree sensor (not shown) for detecting the opening degree of a throttle (not shown) is also connected electrically to the controller 10. The throttle opening degree sensor is capable of outputting to the controller 10 a signal (throttle opening degree signal) produced at least when the throttle opening degree switches from a closed state to an open state.

The controller 10 is adapted to be capable of controlling the electric motor 60, on the basis of the signal produced when the throttle opening degree switches from a closed state to an open state, to move the movable flange 24 of the primary sheave 20 from the normal position (low position) of the movable flange in the standing state of the vehicle toward the direction of narrowing the groove width of the primary sheave 20 (toward the top side). In effect, the controller 10, at the time of the start, controls the electric motor 60 so as to press the movable flange 24 from the normal, low position toward the top side.

With the constitution of this embodiment, when the vehicle starts from the standing state (the state of the vehicle speed of 0 km/h), the controller 10 controls the electric motor 60, on the basis of the signal produced when the opening degree of the throttle switches from a closed state to an open state, to move the movable flange 24 of the primary sheave 20 from the normal position (low position) toward the direction of narrowing the groove width of the primary sheave 20 (toward the top side). In other words, when the vehicle starts, the movable flange 24 is pressed from the normal, low position toward the top side with the electric motor 60 controlled by the controller 10. As the movable flange 24 is pressed toward the top side, a load is applied in the direction of arrow 21 (Fig. 1) to the belt 40, so that the tension on the belt 40 increases. As the tension increases, fluttering of the belt 40 due to torque variation at the time the vehicle starts is prevented, making it possible to reduce vibration and noise at the time the vehicle starts.

Incidentally, with this embodiment, the position of the movable flange 24 pressed toward the top side is set to a position that permits to press the belt 40 appropriately to the extent that the transmission ratio does not change and that permits to prevent the belt from fluttering at the time of start. Specifically, it is the position that permits to apply a load to the belt to the extent the external shape of the belt deforms slightly. For example, it is a position shifted from the low position toward the top side by 0.2 mm. However, the position of the movable flange 24 may be set to any appropriate position according to the condition of use.

Also with this embodiment, a condition or a belt load starting condition is set on which the movable flange 24 in the low position is pressed toward the top side on the basis of the signal produced when the throttle opening degree switches from a closed state to an open state. However, as long as a certain load is applied when the vehicle speed is very low at the time of start, it is possible to prevent the belt 40 from fluttering. Therefore, the signal for starting a load is not limited to the information of the throttle opening degree sensor. For example, it is possible to set the belt load starting condition on the basis of information of the vehicle speed sensor for detecting the vehicle speed.

The constitution around the controller 10 and the condition of removing the load on the belt will now be described with reference to Fig. 2.

The vehicle of this embodiment is provided with the controller 10 (transmission ratio controller) as a central component of a control system for controlling the transmission ratio of the continuously variable transmission 100.

The controller 10 is adapted to control the electric motor 60 so as to move the movable flange 24, that has moved toward the direction of narrowing the groove width of the primary sheave 20, back to the normal position (low position) on the basis of a specified condition.

By instantaneously moving the movable flange 24 back to the normal low position, after it is once pressed to the belt 40, or making an action of moving back the belt 40, a quasi damping action may be effected. Therefore, it is possible not only to prevent the belt 40 from fluttering but absorb the flutter of the belt 40. This further ensures the effect of preventing the belt flutter at the time of start.

Moreover, as an action of moving back the movable flange 24 is made instantaneously, there is no possibility of change in transmission ratio of the continuously variable transmission 100 and of an adverse effect on starting performance.

The condition of moving the movable flange 24, which has been pushed toward the top side, back to the normal low position, or the removal condition of a belt load, will now be described. The removal condition of a belt load of this embodiment is set on the basis of information of the vehicle speed sensor for detecting the vehicle speed. Specifically, when the vehicle starts, the controller 10 controls the electric motor 60 so as to move the movable flange 24, that has moved toward the direction of narrowing the groove width of the primary sheave 20 when the vehicle speed detected by the vehicle speed sensor exceeds a threshold value, back to the normal position (low position). By this control, the movable flange 24 having moved toward the top side returns again to the low position, and the load temporarily applied to the belt 40 is removed.

In this embodiment, the threshold value of the vehicle speed is determined on the basis of the vehicle speed range in which the belt 40 may possibly flutter due to torque variation when the vehicle starts. That is, in the range of very low vehicle speed below the threshold value, the movable flange 24 cannot follow the slackening motion of the belt 40 and so the flutter of the belt 40 is possible. In the vehicle speed range above the threshold value, however, as a belt thrust occurs along with increase in the vehicle speed, the belt flutter subsides by itself. For example, with the constitution of this embodiment, the belt flutter may subside at vehicle speeds of 4 km/h and over, in which case the threshold value is set to 4 km/h or more. This threshold value may be appropriately set according to vehicle constitution, drive condition, and the like.

The vehicle speed sensor for detecting the vehicle speed is electrically connected to the controller 10. The vehicle speed sensor of this embodiment is a rear wheel revolution sensor 83 for detecting the revolution of the rear wheel 82. The rear wheel revolution sensor 83 is disposed in the vicinity of the rear wheel 82 and connected electrically to the controller 10 to output rear wheel revolution signals to the controller 10.

While this embodiment uses the rear wheel revolution sensor 83 for detecting directly the revolution of the rear wheel 82, any sensor other than the rear wheel revolution sensor 83 may be used as long as it is capable of detecting revolution signals in proportion to the vehicle speed. For example, a secondary sheave revolution sensor 37 for detecting the revolution of the secondary sheave 30 may be used. Or, a constitution is possible in which both of these sensors are used.

Further, while the removal condition of a belt load is set on the basis of vehicle speed information in the above example, the removal condition may be based on information other than the vehicle speed because the belt flutter subsides once the belt thrust occurs after the start.

For example, it is possible to preset the removal condition of a belt load with a timer. Specifically, when the vehicle starts, the controller 10 may control the electric motor 60 so as to move the movable flange 24, having moved in the direction of narrowing the groove width of the primary sheave 20, back to the normal position (low position) when a specified period of time has elapsed after the throttle opening degree switched from closed state to open state. In this case, the vehicle speed after the lapse of the specified period of time at least has only to be out of the very low vehicle speed range in which the belt 40 flutters due to torque variation. For example, a timer time may be set to 0.3 seconds after the throttle is opened. The timer time may be appropriately set according to the condition of use.

The removal condition of a belt load may be otherwise preset as a pattern of instruction to the electric motor 60 rather than predetermining on the basis of information physically detected with a sensor or the like. Specifically, while the controller 10 outputs an instruction for pressing the movable flange 24 from the low position toward the top side when the vehicle starts, it is possible to include in the output signal an instruction for moving the movable flange 24 back to the normal low position.

Besides the above examples, it is possible for example to detect the connection and disconnection of a starting clutch (either active control type or passive control type (centrifugal clutch, etc.) is usable) to remove the belt load according the signal produced when the starting clutch is connected. In the example shown in Fig. 2, connection of the centrifugal clutch 85 may be adopted as the removal condition. In that case, connection or disconnection of the clutch 85 is determined by a detecting a twist amount (phase difference between two specified points) of the rotary shaft 35 to which the centrifugal clutch 85 is attached.

Still alternatively, it is possible to utilize any information obtained from the rider's operation when the rider gives up a start (such information as on throttle closing operation or brake applying operation) as a signal for the belt load removal.

It is further possible to measure physical variation amount such as the amount of belt slip, torque variation, or torque tension variation, and to set to remove belt load when the variation amount falls within a specified range. To specifically describe the methods of detecting respective variation amounts, the belt slip amount may be obtained by comparing the transmission ratio determined from the position of the movable sheave 24 of the primary sheave 20 with the transmission ratio calculated from the detected actual values of revolution of the primary sheave 20 and the secondary sheave 30. As for the belt tension, it is possible to place, between the primary sheave 20 and the secondary sheave 30, a member such as a tensioning member that absorbs belt deflection, and measure the belt tension by detecting the reaction force from the belt to that member.

Among the removal conditions of a belt load described above, it is most preferable to be based on the vehicle speed information. In case that the belt load is removed according to the actual measurement of the vehicle speed, it is possible to securely maintain the belt load until the vehicle speed exceeds the very low vehicle speed range (from 0 km/h to the threshold value) even in a situation in which sufficient vehicle speed is not obtained as when starting on an uphill, so that prevention of the belt flutter is actually effected.

The controller 10 of this embodiment will now be described. A sheave position detector 27 for detecting the position of the movable flange 24 of the primary sheave 20 is connected to the controller 10. The sheave position detector 27 is capable of outputting information on the movable flange position (sheave position signal) to the controller 10. The controller 10 controls the electric motor 60 on the basis of information on the flange position (sheave position signal).

To the controller 10 are electrically connected an engine revolution sensor 18 for detecting the revolution of the engine 80 and a primary sheave revolution sensor (not shown) for detecting the revolution of the primary sheave 20, respectively outputting engine revolution signal and primary sheave revolution signal to the controller 10. To the controller 10 may also be inputted a main switch signal and a handlebar switch signal.

The controller 10 of this embodiment is the one implementing overall control of the engine 80 and the continuously variable transmission 100 on the basis of the various signals described above. Specifically, a target transmission ratio is obtained while calculating vehicle speed and acceleration based on the throttle opening degree signal, secondary sheave revolution, drive wheel revolution signal, sheave position signal, etc. And the controller 10 controls actual transmission ratio of the straddle type of vehicle by implementing the so-called ordinary transmission control in which the position of the movable flange 24 of the primary sheave 20 is controlled by driving the electric motor 60 so as to realize the target transmission ratio.

The ordinary transmission control is a control in which a transmission ratio corresponding to the drive condition (vehicle speed, throttle opening degree, etc.) of the vehicle is calculated from a pre-registered map, a transmission instruction for realizing the transmission ratio is given to the continuously variable transmission 100, and finally the transmission ratio is realized. The ordinary transmission control is adapted to realize smooth acceleration and deceleration by decreasing the transmission ratio (controls toward the top side) as the vehicle speed and throttle opening degree increase, and increasing the transmission ratio (controls toward the low side) as the vehicle speed and throttle opening degree decrease.

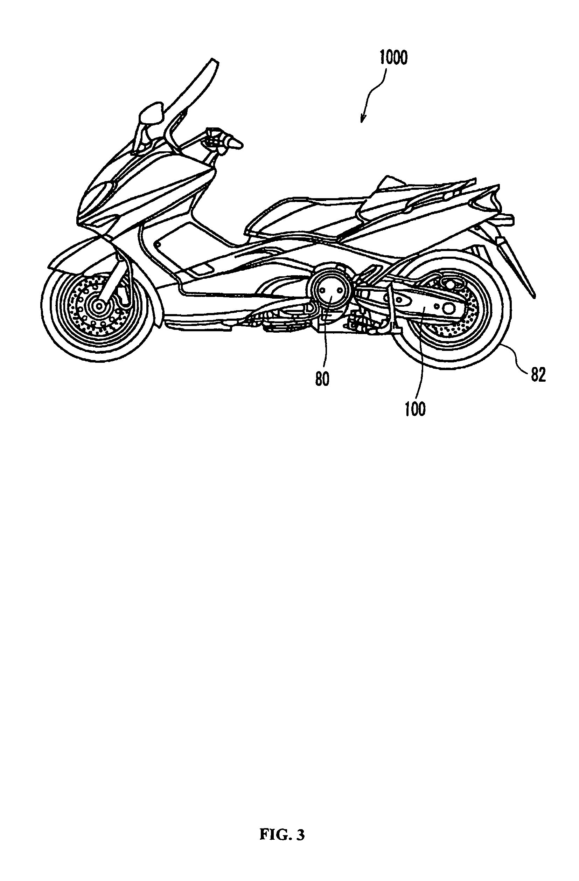

Fig. 3 shows an example vehicle on which the continuously variable transmission 100 of this embodiment is mounted. The vehicle 1000 comprises: the drive source 80; the continuously variable transmission 100 connected to the drive source 80; and the controller 10 (not shown in Fig. 3) for electronically controlling the continuously variable transmission 100. In this embodiment, the vehicle 1000 is a scooter type of motorcycle. The drive source 80 of this embodiment is an engine. The output of the engine 80 is regulated according to an accelerator operation member operated by a rider. In the present case of the scooter type, the accelerator operation member is a throttle grip attached to a handlebar.

In the continuously variable transmission 100, the primary sheave 20 is connected to the engine 80, and the secondary sheave 30 is connected through the final speed reduction mechanism 84 to the rear wheel 82. The drive force of the engine 80 outputted according to the throttle operation is converted into rotary force of the belt 40 through the primary sheave 20. The rotary force of the belt 40 is transmitted through the secondary sheave 30 to the rear wheel 82 to drive the rear wheel 82.

While the above embodiment shows only the straddle type of vehicle as an example, any vehicle with the continuously variable transmission 100 mounted thereon can prevent belt flutter at the time of start by the constitution of this invention. Therefore, the vehicle on which the continuously variable transmission 100 may be mounted is not limited to the straddle type of vehicle. For example, the continuously variable transmission 100 may be mounted on such a vehicle as an SSV (side by side vehicle) with seats for two persons to ride on.

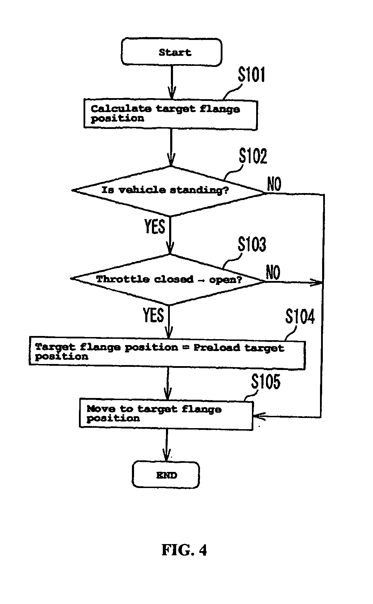

The control flow process of the controller 10 will now be described with reference to the flowchart of Fig. 4. First, in the step S101, the controller 10 determines a target transmission ratio based on the vehicle speed, the engine revolution, the accelerator opening degree, etc., calculates the position of the movable flange 24 of the primary sheave 20 (target flange position) for realizing the target transmission ratio, and calculates the displacement amount of the movable flange 24. The target transmission ratio may be either a fixed value different by a certain amount from the present transmission ratio or a value that changes gradually according to the vehicle speed, engine revolution, and accelerator opening degree at each time point. In the standing state of the vehicle (the state of the vehicle speed of 0), the movable flange 24 is controlled to maintain the low state. In other words, the target flange position is set to the low position.

Next, the controller 10 determines whether or not the vehicle is currently in the standing state (step S102). If the vehicle is not in the standing state, the controller 10 controls to move the movable flange 24 to the target flange position so that the transmission ratio becomes the target transmission ratio (step S105). Thereafter, the controller 10 implements the ordinary transmission control based on the ordinary map.

In case the vehicle is in the standing state, the controller 10 confirms information of the throttle opening degree sensor to determine whether or not the throttle opening degree has switched from closed state to open state (step S103). In case the throttle has not switched from closed state to open state, for example in case the throttle is already open, the controller 10 moves the movable flange 24 to the target flange position to control so that the transmission ratio becomes the target transmission ratio (step S105). Thereafter, the controller 10 implements the ordinary transmission control based on the ordinary map.

On the other hand, in case the throttle has switched from closed state to open state, the controller 10 changes the target flange position calculated in the step S101 to a specified preload target position and rewrites it (step S104). After that, the process moves to the step S105 to move the movable flange 24 to the target flange position changed to the preload target position (step S105). The movable flange 24 moved to the preload target position thereafter controlled to maintain the preload target position until a specified belt load removal condition is inputted.

Here, the specified preload target position is the position shifted toward the top side from the normal movable-flange position (low position) in the standing state of the vehicle. This position is set to an appropriate position so that the movable flange 24 having moved to the preload target position can apply a load to the belt 40 and the transmission ratio is not affected. Specifically , the preload target position is a position at which the movable flange 24 may be pressed to the extent that the belt 40 slightly deforms by the load, for example in this embodiment a position shifted from the low position toward the top side by about 0.2 mm.

Removal of load from the belt 40 will now be described. The controller 10 determines whether or not the specified removal condition of a belt load is met. For example, a case in which the removal condition is determined on the basis of vehicle speed is described. Whether or not the current vehicle speed has exceeded a threshold value is determined. In case the current vehicle speed has not exceeded the threshold value, the controller 10 remains holding the movable flange 24 in the preload target position. After that, in case the vehicle speed increases and exceeds the threshold value, the controller 10 controls to move the movable flange 24 to the target flange position so that the transmission ratio becomes the target transmission ratio.

When the vehicle starts, the movable flange 24 is controlled to maintain the low state determined from a pre-registered map until the vehicle speed exceeds a specified value (for example 15 km/h). On the other hand, the vehicle speed threshold value of the removal condition of a belt load is set for example to 4 km/h as described above, very low in comparison with the specified value described above. Therefore, the target flange position that can be calculated after the vehicle speed exceeds the threshold value is always set to the low position. As a result, the movable flange 24 having once moved to the preload target position thereafter controlled to move back again to the low position when the vehicle speed exceeds the threshold value.

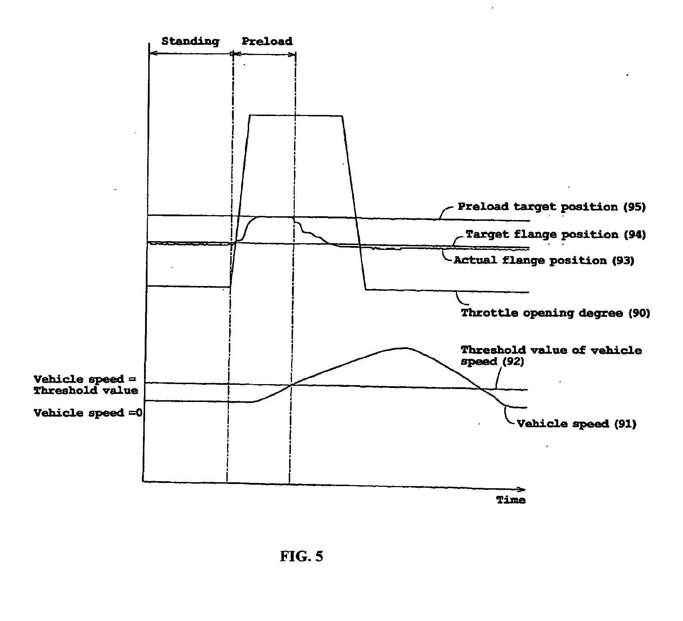

Fig. 5 is a graph of the relationship of the movable flange position and the vehicle speed when the vehicle starts from the standing state. The vertical axis represents values corresponding to respective curves, and the horizontal axis represents the time. The curve 90 represents throttle opening degree; the curve 91, the vehicle speed; the line 92, the threshold value of the vehicle speed; the curve 93, the actual position of the movable flange; the line 94, the target flange position; and the line 95, the preload target position.

When the throttle is opened to start the vehicle from the standing state, the movable flange 24 in the low position starts moving toward the preload target position indicated with the line 95. As a result, temporary load application onto the belt 40 is started. As the belt 40 becomes taut and transmission of torque to the rear wheel 82 begins, the rear wheel 82 rotates to start rising vehicle speed. The speed is detected. When the vehicle speed exceeds the threshold value, the temporary load on the belt 40 is removed, and the movable flange 24 in the preload target position starts moving toward the low position. Controlling in this way makes it possible to shift the movable flange temporarily from the low position toward the top side. So it is possible to apply load to the belt 40.

While the invention is described by way of preferable embodiments, the above description is not restrictive but may be modified in various ways as a matter of course.

This invention makes it possible to provide a straddle type of vehicle in which the belt is prevented from fluttering when the vehicle starts.

### Description of Reference Numerals

10: controller
18: engine revolution sensor
20: primary sheave
21: arrow
24: movable flange
25: rotary shaft
27: sheave position detector
30: secondary sheave
31: arrow
32: fixed flange
34: movable flange
35: rotary shaft
36: spring
37: secondary sheave revolution sensor
38: torque cam
40: belt
60: actuator
80: engine
82: rear wheel
83: rear wheel revolution sensor
84: final speed reduction mechanism
85: centrifugal clutch
90: throttle opening degree curve
91: vehicle speed curve
92: vehicle speed threshold value line
93: measurement curve of movable flange position
94: target flange position line
95: preload target position line
100: continuously variable transmission
1000: vehicle

## Claims

1. A continuously variable transmission (100) for a vehicle (1000), comprising:
a primary sheave (20) adapted to be rotatably coupled to a secondary sheave (30) via an endless belt (40), the primary sheave (20) comprising a fixed flange (22) and a moveable flange (24) defining a belt groove therebetween for accommodating the endless belt (40);
a controller (10);
a throttle opening sensor connected to the controller (10) and associated with a vehicle throttle, wherein the throttle opening sensor is adapted to output a signal to the controller (10) at least when the throttle is switched from a closed state to an open state; and
an actuator (60) connected to the controller (10) and adapted to move the moveable flange (24) of the primary sheave (20) relative to the fixed flange (22) to vary the width of the belt groove and vary the transmission ratio between the primary sheave (20) and the secondary sheave (30), wherein, when an associated vehicle (1000) begins motion from a standing state and the throttle opening sensor outputs a signal to the controller (10) indicating that the throttle is switched from a closed state to an open state, the actuator (60) is adapted to be activated by the controller (10) to move the moveable flange (24) in a direction to decrease the width of the belt groove of the primary sheave (20); **characterized in that**
the controller (10) is adapted to control the actuator (60) to move the moveable flange (24) of the primary sheave (20) in a direction to increase the width of the belt groove on the basis of a specified condition after the movable flange (24) is initially moved in a direction to decrease the width of the belt groove.

2. The transmission (100) of Claim 1, wherein the specified condition comprises an increase in vehicle speed above a predetermined value.

3. The transmission (100) of Claim 2, further comprising a vehicle speed sensor coupled to the controller (10) and adapted to detect the speed of the vehicle (1000) and output a signal to the controller (10) when the vehicle speed increase above the predetermined value.

4. The transmission (100) of any preceding Claim, wherein the specified condition comprises an elapsed time period from the throttle opening sensor outputting a signal to the controller (10) when the throttle is switched from a closed state to an open state.

5. The transmission (100) of any preceding Claim, wherein the secondary sheave (30) comprises a fixed flange (32) and a moveable flange (34) which define a groove therebetween for accommodating the endless belt (40), wherein the moveable flange (34) of the secondary sheave (30) is biased towards a direction to decrease the groove width.

6. The transmission (100) of Claim 5, wherein the moveable flange (34) of the secondary sheave (30) is biased with a spring (36) and a torque cam (38).

7. The continuously variable transmission (100) of claim 1, wherein
the transmission (100) is electronically controlled by the controller (10), wherein
the belt (40) is routed around V-grooves of the primary sheave (20) and the secondary sheave (30) to continuously change transmission ratio by changing the groove widths of the respective sheaves (20, 30),
the fixed flange (22) and a movable flange (24) of the primary sheave (20) are attached to a rotary shaft (25),
the throttle opening sensor is configured to detect the opening degree of the vehicle throttle, and
the movement of the movable flange (24) is from an ordinary position in the standing state of the vehicle (1000) toward the direction of decreasing the groove width of the primary sheave (20).

8. The continuously variable transmission (100) of Claim 7, wherein the controller (10) controls the actuator (60) so as to move the movable flange (24) that has moved toward the direction of decreasing the groove width of the primary sheave (20) back to the ordinary movable sheave position on the basis of a specified condition.

9. The continuously variable transmission (100) of Claim 8, wherein a vehicle speed sensor for detecting a vehicle speed is connected to the controller (10), and wherein the specified condition is the time the vehicle speed detected with the vehicle speed sensor exceeds a threshold value.

10. The continuously variable transmission (100) of Claim 8 or 9, wherein the specified condition is the time a specified period of time has elapsed after the throttle opening degree is switched from closed state to open state.

11. The continuously variable transmission (100) of any of Claims 7 to 10, wherein
the secondary sheave (30) is made up of a fixed flange (32) and a movable flange (34) attached to a rotary shaft (35), and
the movable flange (34) of the secondary sheave (30) is urged with a spring (36) and a torque cam (38) toward the direction of decreasing the groove width.

12. The continuously variable transmission (100) of any of Claims 7 to 11, wherein, at the time the vehicle (1000) starts from the standing state, the movable flange (24) that has moved toward the direction of decreasing the groove width is pressing the belt (40) routed around the V-groove of the primary sheave (20).

13. A vehicle (1000) comprising a continuously variable transmission (100) of any preceding claim.

## Patentansprüche

1. Stufenloses Getriebe (100) für ein Fahrzeug (1000), wobei das Getriebe (100) Folgendes umfasst:
eine Primärscheibe (20), die dafür eingerichtet ist, über einen Endlosriemen (40) drehbar an eine Sekundärscheibe (30) gekoppelt zu werden, wobei die Primärscheibe (20) einen unbeweglichen Flansch (22) und einen beweglichen Flansch (24) umfasst, die zwischen denselben eine Riemenrille definieren, um den Endlosriemen (40) aufzunehmen,
ein Steuergerät (10),
einen Drosselöffnungssensor, der mit dem Steuergerät (10) verbunden und mit einer Fahrzeugdrossel verknüpft ist, wobei der Drosselöffnungssensor dafür eingerichtet ist, wenigstens dann, wenn die Drossel von einem geschlossenen Zustand zu einem offenen Zustand umgeschaltet wird, ein Signal an das Steuergerät (10) auszugeben, und
ein Stellelement (60), das mit dem Steuergerät (10) verbunden und dafür eingerichtet ist, den beweglichen Flansch (24) der Primärscheibe (20) im Verhältnis zu dem unbeweglichen Flansch (22) zu bewegen, um die Breite der Riemenrille zu verändern und das Übersetzungsverhältnis zwischen der Primärscheibe (20) und der Sekundärscheibe (30) zu verändern, wobei das Stellelement (60) dafür eingerichtet ist, wenn ein verknüpftes Fahrzeug (1000) eine Bewegung aus einem Stilltand beginnt und der Drosselöffnungssensor ein Signal an das Steuergerät (10) ausgibt, das anzeigt, dass die Drossel von einem geschlossenen Zustand zu einem offenen Zustand umgeschaltet wird, durch das Steuergerät (10) aktiviert zu werden, um den beweglichen Flansch (24) in einer Richtung zu bewegen, um die Breite der Riemenrille der Primärscheibe (20) zu vermindern, **dadurch gekennzeichnet, dass**
das Steuergerät (10) dafür eingerichtet ist, das Stellelement (60) so zu steuern, dass es auf der Grundlage einer spezifizierten Bedingung den beweglichen Flansch (24) der Primärscheibe (20) in einer Richtung bewegt, um die Breite der Riemenrille zu steigern, nachdem der bewegliche Flansch (24) anfangs in einer Richtung bewegt worden ist, um die Breite der Riemenrille zu vermindern.

2. Getriebe (100) nach Anspruch 1, wobei die spezifizierte Bedingung eine Steigerung der Fahrzeuggeschwindigkeit über einen vorbestimmten Wert umfasst.

3. Getriebe (100) nach Anspruch 2, das ferner einen Fahrzeuggeschwindigkeitssensor umfasst, der an das Steuergerät (10) gekoppelt und dafür eingerichtet ist, die Geschwindigkeit des Fahrzeugs (1000) zu erfassen und ein Signal an das Steuergerät (10) auszugeben, wenn die Fahrzeuggeschwindigkeit über den vorbestimmten Wert ansteigt.

4. Getriebe (100) nach einem der vorhergehenden Ansprüche, wobei die spezifizierte Bedingung einen abgelaufenen Zeitraum umfasst, seit der Drosselöffnungssensor ein Signal an das Steuergerät (10) ausgibt, wenn die Drossel von einem geschlossenen Zustand zu einem offenen Zustand umgeschaltet wird.

5. Getriebe (100) nach einem der vorhergehenden Ansprüche, wobei die Sekundärscheibe (30) einen unbeweglichen Flansch (32) und einen beweglichen Flansch (34) umfasst, die zwischen denselben eine Riemenrille definieren, um den Endlosriemen (40) aufzunehmen, wobei der bewegliche Flansch (34) der Sekundärscheibe (30) zu einer Richtung hin vorgespannt wird, um die Rillenbreite zu vermindern.

6. Getriebe (100) nach Anspruch 5, wobei der bewegliche Flansch (34) der Sekundärscheibe (30) mit einer Feder (36) und einem Drehmomentnocken (38) vorgespannt wird.

7. Stufenloses Getriebe (100) nach Anspruch 1, wobei
das Getriebe (100) elektronisch durch das Steuergerät (10) gesteuert wird, wobei
der Riemen (40) um V-Rillen der Primärscheibe (20) und der Sekundärscheibe (30) geführt wird, um durch das Verändern der Rillenbreiten der jeweiligen Scheiben (20, 30) kontinuierlich das Übersetzungsverhältnis zu verändern,
der unbewegliche Flansch (22) und ein beweglicher Flansch (24) der Primärscheibe (20) an einer Drehwelle (25) befestigt sind,
der Drosselöffnungssensor dafür konfiguriert ist, den Öffnungsgrad der Fahrzeugdrossel zu erfassen, und
die Bewegung des beweglichen Flanschs (24) von einer gewöhnlichen Stellung im Stillstand des Fahrzeugs (1000) zu der Richtung zum Vermindern der Rillenbreite der Primärscheibe (20) hin erfolgt.

8. Stufenloses Getriebe (100) nach Anspruch 7, wobei das Steuergerät (10) das Stellelement (60) so steuert, dass es auf der Grundlage einer spezifizierten Bedingung den beweglichen Flansch (24), der sich zu der Richtung zum Vermindern der Rillenbreite der Primärscheibe (20) hin bewegt hat, zurück zu der gewöhnlichen Stellung der beweglichen Scheibe bewegt.

9. Stufenloses Getriebe (100) nach Anspruch 8, wobei ein Fahrzeuggeschwindigkeitssensor zum Erfassen einer Fahrzeuggeschwindigkeit mit dem Steuergerät (10) verbunden ist und wobei die spezifizierte Bedingung die Zeit ist, welche die mit dem Fahrzeuggeschwindigkeitssensor erfasste Fahrzeuggeschwindigkeit einen Schwellenwert überschreitet.

10. Stufenloses Getriebe (100) nach Anspruch 8 oder 9, wobei die spezifizierte Bedingung die Zeit ist, zu der ein spezifizierter Zeitraum verstrichen ist, nachdem der Drosselöffnungsgrad von einem geschlossenen Zustand zu einem offenen Zustand umgeschaltet wird.

11. Stufenloses Getriebe (100) nach einem der Ansprüche 7 bis 10, wobei
die Sekundärscheibe (30) aus einem unbeweglichen Flansch (32) und einem beweglichen Flansch (34), die an einer Drehwelle (35) befestigt sind, besteht und
der bewegliche Flansch (34) der Sekundärscheibe (30) mit einer Feder (36) und einem Drehmomentnocken (38) zu der Richtung zum Vermindern der Rillenbreite hin gedrückt wird.

12. Stufenloses Getriebe (100) nach einem der Ansprüche 7 bis 11, wobei zu dem Zeitpunkt, zu dem das Fahrzeug (1000) aus dem Stillstand startet, der bewegliche Flansch (24), der sich zu der Richtung zum Vermindern der Rillenbreite hin bewegt hat, den Riemen (40) presst, der um die V-Rille der Primärscheibe (20) geführt wird.

13. Fahrzeug (1000), das ein stufenloses Getriebe (100) nach einem der vorhergehenden Ansprüche umfasst.

## Revendications

1. Transmission à variation continue (100) pour un véhicule (1000), comprenant :
une poulie primaire (20), adaptée pour être accouplée de manière rotative à une poulie secondaire (30) par l'intermédiaire d'une courroie sans fin (40), la poulie primaire (20) comprenant une bride fixe (22) et une bride mobile (24) définissant une rainure de la courroie entre elles pour recevoir la courroie sans fin (40) ;
un dispositif de commande (10) ;
un capteur de l'ouverture du papillon des gaz connecté au dispositif de commande (10) et associé à un papillon des gaz du véhicule, le capteur de l'ouverture du papillon des gaz étant adapté pour transmettre un signal au dispositif de commande (10), au moins lorsque le papillon des gaz est commuté d'un état fermé vers un état ouvert ; et
un actionneur (60), connecté au dispositif de commande (10) et adapté pour déplacer la bride mobile (24) de la poulie primaire (20) par rapport à la bride fixe (22), afin de changer la largeur de la rainure de la courroie et de changer le rapport de transmission entre la poulie primaire (20) et la poulie secondaire (30), dans laquelle, lorsqu'un véhicule associé (1000) commence à se déplacer à partir d'un état d'arrêt, le capteur de l'ouverture du papillon des gaz transmettant un signal au dispositif de commande (10) indiquant que le papillon des gaz est commuté d'un état fermé vers un état ouvert, l'actionneur (60) est adapté pour être actionné par le dispositif de commande (10) afin de déplacer la bride mobile (24) dans une direction destinée à réduire la largeur de la rainure de la courroie de la poulie primaire (20), **caractérisée en ce que**
le dispositif de commande (10) est adapté pour contrôler l'actionneur (60) afin de déplacer la bride mobile (24) de la poulie primaire (20) dans une direction destinée à accroître la largeur de la rainure de la courroie, sur la base d'une condition spécifiée, après le déplacement initial de la bride mobile (24) dans une direction destinée à réduire la largeur de la rainure de la courroie.

2. Transmission (100) selon la revendication 1, dans laquelle la condition spécifiée comprend un accroissement de la vitesse du véhicule au-delà d'une valeur prédéterminée.

3. Transmission (100) selon la revendication 2, comprenant en outre un capteur de la vitesse du véhicule, accouplé au dispositif de commande (10) et adapté pour détecter la vitesse du véhicule (1000) et pour transmettre un signal au dispositif de commande (10) lors d'un accroissement de la vitesse du véhicule au-delà de la valeur prédéterminée.

4. Transmission (100) selon l'une quelconque des revendications précédentes, dans laquelle la condition spécifiée comprend une période de temps écoulée depuis la transmission d'un signal par le capteur de l'ouverture du papillon des gaz au dispositif de commande (10) lorsque le papillon des gaz est commuté d'un état fermé vers un état ouvert.

5. Transmission (100) selon l'une quelconque des revendications précédentes, dans laquelle la poulie secondaire (30) comprend une bride fixe (32) et une bride mobile (34), définissant une rainure entre elles pour recevoir la courroie sans fin (40), la bride mobile (34) de la poulie secondaire (30) étant poussée dans une direction destinée à réduire la largeur de la rainure.

6. Transmission (100) selon la revendication 5, dans laquelle la bride mobile (34) de la poulie secondaire (30) est sollicitée par un ressort (36) et une came de couple (38).

7. Transmission (100) selon la revendication 1, dans laquelle
la transmission (100) est contrôlée de manière électronique par le dispositif de commande (10), et dans laquelle
la courroie (40) est guidée autour de rainures en V de la poulie primaire (20) et de la poulie secondaire (30), afin de changer en continu le rapport de transmission en changeant les largeurs de rainure des poulies respectives (20, 30) ;
la bride fixe (22) et une bride mobile (34) de la poulie primaire (20) sont fixées sur un arbre rotatif (25) ;
le capteur de l'ouverture du papillon des gaz est configuré de sorte à détecter le degré d'ouverture du papillon des gaz du véhicule ; et
le déplacement de la bride mobile (24) s'étend d'une position ordinaire dans l'état d'arrêt du véhicule (1000) dans la direction de la réduction de la largeur de rainure de la poulie primaire (20).

8. Transmission à variation continue (100) selon la revendication 7, dans laquelle le dispositif de commande (10) contrôle l'actionneur (60) de sorte à ramener la bride mobile (24), qui s'est déplacée dans la direction de la réduction de la largeur de rainure de la poulie primaire (20), vers la position ordinaire de la poulie mobile, sur la base d'une condition spécifiée.

9. Transmission à variation continue (100) selon la revendication 8, dans laquelle un capteur de la vitesse du véhicule, destiné à détecter une vitesse du véhicule, est connecté au dispositif de commande (10), la condition spécifiée étant constituée par le moment auquel la vitesse du véhicule détectée par le capteur de la vitesse du véhicule dépasse une valeur de seuil.

10. Transmission à variation continue (100) selon les revendications 8 ou 9, dans laquelle la condition spécifiée est constituée par le moment précédant l'écoulement d'une période de temps spécifiée après la commutation du degré d'ouverture du papillon des gaz de l'état fermé vers l'état ouvert.

11. Transmission à variation continue (100) selon l'une quelconque des revendications 7 à 10, dans laquelle
la poulie secondaire (30) comprend une bride fixe (32) et une bride mobile (34) fixées sur un arbre rotatif (35) ; et
la bride mobile (34) de la poulie secondaire (30) est poussée par un ressort (36) et une came de couple (38) dans la direction destinée à réduire la largeur de la rainure.

12. Transmission à variation continue (100) selon l'une quelconque des revendications 7 à 11, dans laquelle, lorsque le véhicule (1000) démarre à partir de l'état d'arrêt, la bride mobile (24), qui s'est déplacée dans la direction de réduction de la largeur de la rainure, exerce une pression sur la courroie (40) guidée autour de la rainure en V de la poulie primaire (20).

13. Véhicule (1000) comprenant une transmission à variation continue (1000) selon l'une quelconque des revendications précédentes.
